# EUROPÄISCHE PATENTSCHRIFT

(11) **EP 0 579 088 B1**
(45) Veröffentlichungstag und Bekanntmachung des Hinweises auf die Patenterteilung: **12.02.1997**
(21) Anmeldenummer: 93110783.3
(22) Anmeldetag: 06.07.1993
(51) Int. Cl.: H01F 1/08, H01F 1/113, H01F 1/26, H01F 1/37

(54) **Verfahren zur Herstellung einer magnetisierbaren Füllstoff enthaltenden Epoxidharzmasse**
Producing process of an epoxy-resin mass containing a magnetisable filter
Procédé de fabrication d'une masse en résine époxyde contenant une charge magnétisable

(30) Priorität: 17.07.1992 DE 4223623
(43) Veröffentlichungstag der Anmeldung: 19.01.1994
(73) Patentinhaber: SIEMENS AKTIENGESELLSCHAFT, 80333 München (DE)
(72) Erfinder: Markert, Helmut, Dr., D-90461 Nürnberg (DE); Datz, Armin, Dr., D-91099 Poxdorf (DE); Donner, Peter, D-91334 Hemhofen (DE); Schreyer, Michael, Dr., D-91085 Weisendorf (DE); Zapf, Lothar, Dr., D-63755 Alzenau (DE); Reppel, Georg-Werner, Dipl.-Phys., D-63546 Hammersbach (DE)

(56) Entgegenhaltungen:
- EP-A- 0 281 295
- PATENT ABSTRACTS OF JAPAN vol. 7, no. 233 (E-204)15. Oktober 1983 & JP-58 122 705
- PATENT ABSTRACTS OF JAPAN vol. 11, no. 152 (E-507)16. Mai 1987 & JP-61 288 403

## Beschreibung

Die Erfindung betrifft ein Verfahren zur Herstellung einer magnetisierbaren Füllstoff enthaltenden, rieselfähigen, latent reaktiven, phenolisch härtbaren Epoxidharzmasse.

Zur Herstellung von kunststoffgebundenen Magneten werden rieselfähige, unter Druck formbare, thermisch härtbare Harzmassen, die magnetisierbaren Füllstoff enthalten, verwendet. Die Kunststoffe dienen dabei vor allem zur Verbesserung der mechanischen Eigenschaften der Magnete. Es hat sich aber gezeigt, daß dies bisher noch nicht in ausreichendem Maße gelungen ist und die mechanischen Eigenschaften der kunststoffgebundenen Magnete, insbesondere die Biegebruchfestigkeit und die Zugfestigkeit, sowohl bei Raumtemperatur als auch bei erhöhter Temperatur noch wesentlich verbessert werden müssen. Eine Erhöhung der mechanischen Festigkeit der kunststoffgebundenen Magnete kann aber nur dann erreicht werden, wenn die gehärtete Harzmatrix selbst ein hohes mechanisch-thermisches Eigenschaftsniveau besitzt und wenn dieses Eigenschaftsniveau durch eine gute Grenzflächenhaftung zwischen magnetisierbarem Füllstoff und Harzmatrix auf den kunststoffgebundenen Magnet übertragen wird.

Die Herstellung von magnetisierbaren Füllstoff enthaltenden, rieselfähigen, härtbaren Harzmassen ist aufgrund der hohen Dichte der Füllstoffe sowie des für die magnetischen Eigenschaften notwendigen hohen Füllstoffgehaltes technisch schwierig. So hat die Aufbereitung der Harzmassen einen entscheidenden Einfluß auf die Güte der Grenzflächenhaftung zwischen Füllstoff und Harzmatrix. Dies gilt sowohl für die Aufbereitung mit Hilfe von Lösungsmitteln als auch ohne deren Verwendung. Hinzu kommt, daß die hochgefüllten Harzmassen bei der Herstellung der Magnete anspruchsvolle Forderungen an die Verarbeitungseigenschaften erfüllen müssen. Die unter hohem Druck kalt geformten Harzmassen müssen nämlich insbesondere eine formstabile Härtung der kunststoffgebundenen Magnete ohne wesentliche Änderung der Dichte gewährleisten. Wird die Formgebung und die thermische Härtung in einer Presse durchgeführt, dann müssen die Harzmassen in sehr kurzer Zeit zu dimensionsstabilen, gut entformbaren Magneten gehärtet werden können, damit ein hoher Fertigungsdurchsatz möglich ist.

Reaktionsharze auf der Basis von Epoxidharzen haben sich - aufgrund der guten Formstoffeigenschaften - zur Herstellung von Verbundwerkstoffen bei anspruchsvollen Einsatzgebieten, wie die Elektronik sowie die Flug- und Fahrzeugtechnik, gut bewährt. Auch zur Herstellung kunststoffgebundener Magnete werden Epoxidharze verwendet, und zwar rieselfähige, härtbare Epoxidharzmassen, die magnetisierbaren Füllstoff in hohen Konzentrationen enthalten. So sind härtbare Epoxidharzmassen bekannt, die durch Mischen von pulverförmigen Epoxidharzen, einem magnetisierbaren Füllstoff und einem Reaktionsbeschleuniger aufbereitet werden (EP-OS 0 155 082). Aufgrund der hohen Dichteunterschiede kann mit dieser Aufbereitungsmethode allerdings eine gleichmäßige Verteilung des Reaktionsharzes und des Beschleunigers im Füllstoffpulver praktisch nicht erreicht werden. Außerdem besitzen die durch einfaches Mischen von pulverförmigen Komponenten hergestellten rieselfähigen Harzmassen keine günstigen Voraussetzungen für den Aufbau einer guten Grenzflächenhaftung zwischen Harzmatrix und Füllstoff, wie dies beispielsweise bei der lösungsmittelfreien Aufbereitung von hochgefüllten Formmassen mit niedrigviskosen Reaktionsharzen der Fall ist. Es ist deshalb verständlich, daß mit den durch Mischen von pulverförmigen Komponenten hergestellten rieselfähigen Epoxidharzmassen der genannten Art lediglich kunststoffgebundene Magnete mit geringer mechanischer Festigkeit erhalten werden.

Bei einem anderen bekannten Verfahren zur Herstellung kunststoffgebundener Magnete wird Magnetpulver, Epoxidharzpulver, Phenolharzpulver und ein Polymerpulver, beispielsweise von einem Vinylbutyral/Vinylalkohol-Copolymer, sowie Diuron, d.h. 3-(3,4-Dichlorphenyl)-1,1-dimethylharnstoff, als Reaktionsbeschleuniger verwendet (EP-OS 0 281 295). Diese Komponenten werden bei Temperaturen um 90°C - unter Erweichung des organischen Materials - in einer Zweirollenmühle gemischt, und die Mischung wird dann zu Platten geformt. Die Platten werden anschließend direkt oder in pulverisierter Form gepreßt und in einer Form gehärtet. Bei diesem Verfahren können nur Mischungen mit einem Füllstoffgehalt bis maximal 95 % zufriedenstellend verarbeitet werden. Wegen der ansonsten unzureichenden Benetzung des Magnetpulvers muß den Mischungen außerdem ein pulverförmiges Polymer, wie Vinylbutyral/Vinylalkohol-Copolymer, als Haftvermittler zugegeben werden.

Auch mit Epoxidharzmassen, die unter Verwendung von Lösungsmitteln hergestellt werden, konnten bislang keine kunststoffgebundenen Magnete mit hoher mechanischer Festigkeit hergestellt werden (US-PS 4 832 891). Die Herstellung von beschleunigerhaltigen, hochgefüllten Harzmassen ist nämlich technisch aufwendig, wenn das Lösungsmittel vollständig entfernt werden soll. Außerdem ist dabei von Nachteil, daß bei den zum Entfernen des Lösungsmittels erforderlichen Bedingungen die Harze bereits polymerisieren bzw. härten können. Dies erschwert aber die vollständige Entfernung des Lösungsmittels.

Für die Verarbeitung von Epoxidharzmassen eignen sich insbesondere sogenannte latent reaktive Epoxidharze, die bei Raumtemperatur eine gute Lagerstabilität besitzen und ohne nachträglichen Zusatz eines Reaktionsbeschleunigers thermisch rasch gehärtet werden können.

Aufgabe der Erfindung ist es, einen rationellen Weg zur lösungsmittelfreien Herstellung einer magnetisierbaren Füllstoff enthaltenden, rieselfähigen, latent reaktiven, phenolisch härtbaren Epoxidharzmasse anzugeben, die lagerstabil ist, zur Formgebung kalt oder warm verpreßt werden kann und - durch thermische Härtung - dimensionsstabile, kunststoffgebundene Magnete mit hoher mechanischer Festigkeit ergibt.

Dies wird erfindungsgemäß dadurch erreicht, daß aus einer magnetisierbaren Füllstoff enthaltenden, thermisch polymerisierbaren Reaktionsharzmischung von Polyepoxid- und Polyisocyanatharz mit einem Molverhältnis der Epoxidgruppen zu den Isocyanatgruppen > 1 bei Reaktionstemperaturen bis zu 180°C, unter Verwendung von substituiertem Imidazol als Reaktionsbeschleuniger, eine isocyanatgruppenfreie, latent reaktive prepolymere Epoxidharzmischung mit Oxazolidinon- und/oder Isocyanuratstrukturen in Pulverform hergestellt wird, und daß die prepolymere Epoxidharzmischung mit einer pulverförmigen, magnetisierbaren Füllstoff enthaltenden Phenolharzmischung im Molverhältnis der Epoxidgruppen zu den phenolischen Hydroxylgruppen von 1:0,4 bis 1:1,1 vermischt wird, gegebenenfalls unter Zusatz von weiterem magnetisierbaren Füllstoff und/oder von Additiven.

Beim Verfahren nach der Erfindung werden zunächst aus Polyepoxid- und Polyisocyanatharzen - ohne Verwendung von Lösungsmittel - rieselfähige isocyanatgruppenfreie, latent reaktive prepolymere Epoxidharzmischungen hergestellt. Dazu werden die Polyepoxidharze und die Polyisocyanatharze im molaren Verhältnis der Epoxidgruppen zu den Isocyanatgruppen von > 1 gemischt, vorzugsweise im Verhältnis zwischen 1,5 und 3,5. Dies erfolgt beispielsweise folgendermaßen.

In einem thermostatisierbaren und evakuierbaren Mischbehälter (Nutzvolumen: 5 1), der mit einem Hochleistungsrührer (beispielsweise mit Duplexknetschaufeln) ausgerüstet ist und eine kontinuierliche Temperaturmessung erlaubt, werden Polyepoxidharz und Polyisocyanatharz bei Raumtemperatur vorgelegt und unter Rühren auf 80 bis 100°C erwärmt, gemessen in der Reaktionsharzmischung mittels eines Thermofühlers, und entgast. In die erwärmte Reaktionsharzmischung wird portionsweise magnetisierbarer Füllstoff eingemischt, dann wird unter weiterem Rühren - bei Temperaturen bis 100°C - 2 bis 3 h entgast. Anschließend wird der Reaktionsbeschleuniger in die Reaktionsharzmischung eindosiert und die Mischung 15 min unter Rühren entgast. Dann wird der Mischbehälter auf eine Temperatur von 160 bis 190°C aufgeheizt und die Mischung zur Reaktion gebracht. Die Temperatur der Reaktionsharzmischung kann dabei bis 180°C ansteigen; im allgemeinen beträgt die Reaktionstemperatur 130 bis 160°C.

Die Reaktion wird nach einer gewissen Zeit abgebrochen, die durch Vorversuche bestimmt wird; der Abbruch erfolgt dabei durch Abkühlen. Bei den Vorversuchen werden der Epoxidumsatz und die Viskosität ermittelt. Der Umsatz der Epoxidgruppen soll, abhängig vom Molverhältnis der eingesetzten Epoxid- und Isocyanatgruppen, bei bestimmten Werten liegen. So soll der Umsatz beispielsweise bei einem Molverhältnis von 2:1 zwischen 45 und 60 % und bei einem Molverhältnis von 3:1 zwischen 30 und 45 % betragen. Durch IR-Spektroskopie wird - anhand der fehlenden Absorptionsbande bei 2245 cm⁻¹ - festgestellt, daß die Epoxidharzmischung keine Isocyanatgruppen mehr enthält.

Die bei der vorstehend beschriebenen Reaktion erhaltene isocyanatgruppenfreie, latent reaktive prepolymere Epoxidharzmischung wird noch pulverisiert, was in der Weise erfolgen kann, daß bei Raumtemperatur mit einer Feinprallmühle auf eine Korngröße < 400 µm gemahlen wird. Bei einem Füllstoffgehalt über 90 % erübrigt sich der Mahlprozeß, da die erstarrende Masse bereits durch das Rührwerk auf eine geeignete Korngröße zerkleinert wird. Die rieselfähige prepolymere Epoxidharzmischung wird dann unter Ausschluß von Feuchtigkeit gelagert.

Entsprechend dem erfindungsgemäßen Verfahren wird die prepolymere Epoxidharzmischung mit einer pulverförmigen Phenolharzmischung, die magnetisierbaren Füllstoff enthält, vermischt; zur Herstellung dieser rieselfähigen Phenolharzmischung kann der vorstehend beschriebene Mischbehälter verwendet werden. Dabei wird ein Phenolharz unter Rühren bei Temperaturen bis zu 160°C aufgeschmolzen und 1,5 h entgast. Anschließend wird der magnetisierbare Füllstoff - bei Temperaturen bis zu 160°C - portionsweise in das geschmolzene Phenolharz eingemischt, dann wird etwa 1,5 h unter Rühren entgast. Nachfolgend wird die den magnetisierbaren Füllstoff enthaltende Phenolharzmischung im Mischbehälter auf Raumtemperatur abgekühlt, wobei sie in zerkleinerter Form anfällt. Bei Raumtemperatur wird die Phenolharzmischung dann mit einer Feinprallmühle auf eine Korngröße < 400 µm gemahlen. Bei einem Füllstoffgehalt über 90 % erübrigt sich der Mahlprozeß, da die erstarrende Masse bereits durch das Rührwerk auf eine geeignete Korngröße zerkleinert wird. Die den magnetisierbaren Füllstoff enthaltende rieselfähige Phenolharzmischung wird bei Raumtemperatur unter Ausschluß von Feuchtigkeit gelagert.

Zur Herstellung der rieselfähigen Epoxidharzmasse werden die prepolymere Epoxidharzmischung und die Phenolharzmischung - bei Raumtemperatur - im Molverhältnis der phenolischen Hydroxylgruppen zu den Epoxidgruppen von 0,4 bis 1,1 gemischt; vorzugsweise liegt das Molverhältnis bei 0,8 bis 1,0. Gegebenenfalls kann dies unter Zusatz von weiterem magnetisierbaren Füllstoff und/oder von Additiven erfolgen. Zum Mischen der Komponenten kann beispielsweise ein Kegelstumpfmischer mit Wendelrührer verwendet werden. Die auf diese Weise erhaltene rieselfähige, latent reaktive, phenolisch härtbare Epoxidharzmasse wird bei Raumtemperatur unter Ausschluß von Feuchtigkeit gelagert.

Zur Formgebung bzw. zur Härtung von Magneten wird die Epoxidharzmasse nach der Erfindung unter einem Druck von 10 bis 1000 MPa kalt geformt, d.h. zu Formkörpern gepreßt; vorzugsweise wird dabei ein Druck im Bereich von 200 bis 800 MPa angewendet. Bei der Formgebung kann es im übrigen von Vorteil sein, wenn die Epoxidharzmasse ein Gleit- oder Formtrennmittel enthält. Der entformte Preßling wird anschließend bei Temperaturen bis zu 200°C gehärtet. Zur Erhöhung der Dichte des Preßlings kann die Formgebung unter Druck auch bei Temperaturen bis zu 100°C erfolgen.

Eine andere Möglichkeit zur Formgebung und Härtung besteht darin, daß die Epoxidharzmasse bei Temperaturen von 160 bis 190°C unter Druck heiß geformt und in der Form gehärtet wird, im allgemeinen innerhalb von 1 bis 3 min. Eine eventuell erforderliche Nachhärtung des entformten Preßlings kann in einem Ofen bei Temperaturen bis zu 200°C erfolgen.

Für die erfindungsgemäße Epoxidharzmasse bzw. zur Herstellung kunststoffgebundener Magnete eignen sich magnetisierbare Füllstoffe in Pulverform sowie in Form von plättchenförmigen Teilchen (Flakes) oder Kurzfasern. Vorzugsweise werden Pulver mit Teilchengrößen zwischen 1 und 500 µm eingesetzt.

Als magnetisierbarer Füllstoff kommen sowohl weichmagnetische als auch hartmagnetische Werkstoffe in Frage. Geeignete weichmagnetische Füllstoffe sind insbesondere Oxidkeramiken (wie Co- und Fe-Ferrite), metallische Werkstoffe in kristalliner oder amorpher Form, wie Fe und FeSi-, FeP-, FeNi-, FeCo- oder FeNiMo(Cu)-Legierungen, sowie amorphe Werkstoffe auf Basis FeSiB und FeNi(Co)B. Als hartmagnetische Füllstoffe eignen sich insbesondere Oxidkeramiken (wie Ba- und Sr-Ferrite), metallische Legierungen auf Basis AlNiCo oder FeCoCr sowie Seltenerdmagnetwerkstoffe auf Basis SECo₅, SE₂Co₁₇, SE₂M₁₄B und SEMN(C), wobei SE mindestens ein Seltenerdmetall und M mindestens ein Übergangsmetall bedeutet.

Als Polyepoxidharz eignen sich beim erfindungsgemäßen Verfahren insbesondere Bisphenol A- und Bisphenol F-Epoxidharze sowie Mischungen dieser Epoxidharze mit Phenol- und/ oder Kresolnovolak-Epoxidharzen, ferner Triglycidylisocyanurat und Tetraglycidyldiaminodiphenylmethan. Von Vorteil ist dabei, daß diese Polyepoxidharze kommerziell zugänglich sind.

Die Siliconepoxidharze, die beim Verfahren nach der Erfindung zum Einsatz gelangen können, sind in der EP-OS 0 399 199 beschrieben. Diese Siliconepoxidharze haben folgende Struktur: 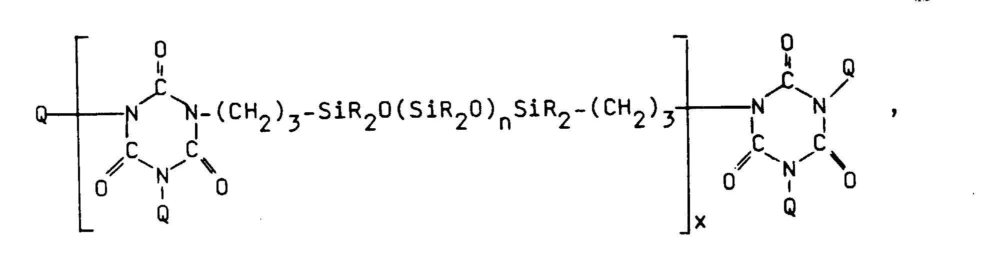 wobei folgendes gilt:
n ist eine ganze Zahl von 0 bis 25,
x ist eine ganze Zahl von 0 bis 3,
R = Alkyl oder Aryl,
Q = -(CH₂)₃SiR₂O(SiR₂O)ₙSiR₂R',
   wobei n und R die vorstehend angegebene Bedeutung haben und R' ein epoxyfunktioneller Rest mit 6 C-Atomen ist.

Der Gehalt an Siliconepoxidharz beträgt vorteilhaft bis zu 20 %, vorzugsweise 1 bis 10 %, jeweils bezogen auf die füllstofffreie Reaktionsharzmischung aus Polyepoxid- und Polyisocyanatharz.

Als Polyisocyanatharz werden vorzugsweise Isomerengemische von Diisocyanatodiphenylmethan eingesetzt. Geeignet sind beispielsweise aber auch Prepolymere von Diisocyanatodiphenylmethan und Isomerengemische von Toluylendiisocyanat. Ferner können Mischungen der genannten Polyisocyanatharze verwendet werden.

Als Reaktionsbeschleuniger finden beim erfindungsgemäßen Verfahren substituierte Imidazole Verwendung. Dabei gelangen vorzugsweise l-Cyanoethyl-2-phenylimidazol, 2-Ethyl-4-methylimidazol und 2-Phenylimidazol zum Einsatz. Weitere geeignete Reaktionsbeschleuniger sind beispielsweise 1,2-Dimethylimidazol, 1-Phenylimidazol, 1-Cyanoethyl-2-methylimidazol, 1-Cyanoethyl-2-ethyl-4-methylimidazol und 1-(β-Cyanoethyl)-2-phenyl-4,5-di(β-cyanoethoxymethyl)-imidazol. Der Gehalt an Reaktionsbeschleuniger beträgt, bezogen auf die füllstofffreie Reaktionsharzmischung, 0,5 bis 1,5 %.

Als Phenolharze eignen sich insbesondere Phenol- und Kresolnovolakharze, einzeln oder in Mischungen. Die Phenolharzmischungen können auch Prepolymere von Novolakharzen und Siliconelastomer (siliconmodifizierte Phenolharze) enthalten oder Mischungen von Phenolharzen und Phosphinoxiden sein.

Beim erfindungsgemäßen Verfahren können Additive zum Einsatz gelangen. Dazu eignen sich insbesondere Glycerinmonostearat und Polyethylen- bzw. Polyamidwachse. Die Additive können der Reaktionsharzmischung aus Polyepoxid- und Polyisocyanatharz und/oder der Phenolharzmischung zugesetzt werden. Alternativ können die Additive, in Pulverform, auch beim Mischen der pulverförmigen prepolymeren Epoxidharzmischung mit der pulverisierten Phenolharzmischung zugesetzt werden.

Ein Verfahren zur Herstellung der magnetisierbaren Füllstoff enthaltenden Epoxidharzmasse nach der Erfindung ist bislang nicht beschrieben. Bekannt ist jedoch, daß durch Reaktion von Polyepoxidharzen mit Polyisocyanatharzen - unter Verwendung von Reaktionsbeschleunigern - isocyanurat- und/oder oxazolidinonmodifizierte Formstoffe erhalten werden. Als thermisch selbsthärtende Mischungen aus Polyepoxidharzen und Polyisocyanatharzen werden beispielsweise Formmassen verwendet, die bei Temperaturen unter 100°C auf einem Walzenstuhl hergestellt und bei Temperaturen bis zu 200°C unter Formgebung gehärtet und dann nachgehärtet werden (siehe dazu: JP-OS 50-059499 und JP-0S 51-128400).

Thermisch selbsthärtende Gießharzmischungen aus Polyepoxidharzen und Polyisocyanatharzen sind auch aus der EP-PS 0 129 787 und der EP-PS 0 130 454 bekannt. Auch hierbei war es das Ziel, aus den Reaktionsharzmischungen von Polyepoxidharz und Polyisocyanatharz direkt den gehärteten Formstoff herzustellen.

Im ersten Fall (EP-PS 0 129 787), einem Verfahren zur Herstellung von Formstoffen für Isolierbauteile aus schnellhärtenden, spritzgußanalog verarbeitbaren Reaktionsharzen, werden dazu flüssige Gemische (mit einer Viskosität bis zu 7000 mPa.s bei 25°C) aus im wesentlichen oxazolidinonfreien Polyepoxiden und aus Polyisocyanaten (EP/IC-Harze) - in einem Ansatzmolverhältnis der Epoxidgruppen zu den Isocyanatgruppen von 1 bis 5 - mittels tert. Aminen oder Imidazolen als Härtungskatalysatoren bei Geliertemperaturen von > 130 bis 150°C unter einem Druck zwischen 1 und 10 bar vernetzt und bei Temperaturen von 150 bis 200°C nachgehärtet (unter Bildung von Oxazolidinon- und Isocyanuratringe enthaltenden Reaktionsharzformstoffen, sogenannte OX/ICR-Formstoffe), wobei die Reaktionsbedingungen derart gewählt werden, daß mehr als 90 % der Epoxid- und Isocyanatgruppen umgesetzt sind und daß das Molverhältnis der Oxazolidinon- und Isocyanuratringe (OX:ICR) im Formstoff über 1 liegt.

Im zweiten Fall (EP-PS 0 130 454), einem Verfahren zur Herstellung von Oxazolidinon- (OX) und Isocyanuratringe (ICR) enthaltenden Reaktionsharzformstoffen (OX/ICR-Formstoffe), bei dem Mischungen aus im wesentlichen OX-freien Polyepoxiden und aus Polyisocyanaten (EP/IC-Harze) in Gegenwart eines Härtungskatalysators bei Temperaturen bis 130°C geliert und anschließend nachgehärtet werden, bis mehr als 90 % der Epoxid- und Isocyanatgruppen umgesetzt sind, werden lösungsmittelfreie, flüssige Gemische aus Polyepoxiden und Polyisocyanaten (mit einer Viskosität bis zu 7000 mPa.s bei 25°C) in einem Ansatzmolverhältnis der Epoxid- und Isocyanatgruppen von 1 bis 5 eingesetzt, als Katalysatoren tert. Amine oder Imidazole verwendet und die Reaktionsbedingungen derart gewählt, daß das Molverhältnis der Oxazolidinon- und Isocyanuratringe (OX:ICR) im Formstoff zwischen 1 und 5,7 liegt.

Das Verfahren nach der Erfindung unterscheidet sich von den vorstehend beschriebenen Verfahren sowohl in der Zielsetzung als auch in der Verfahrensweise. Dabei sollen nämlich nicht gehärtete Formstoffe hergestellt werden, sondern lagerstabile, schmelzbare, latent reaktive prepolymere Epoxidharzmischungen, die mit Phenolharzmischungen - unter Formgebung - zu Formstoffen gehärtet werden. Die bekannten Verfahren sind für diesen Zweck aber nicht geeignet. Dies gilt insbesondere hinsichtlich der Bedingungen für die Reaktion der Polyepoxidharze mit den Polyisocyanatharzen, die hierbei derart ausgelegt sind, daß eine rasche Gelierung bzw. Härtung der Mischungen erreicht wird.

Das erfindungsgemäße Verfahren, d.h. die Herstellung der Epoxidharzmasse, läßt sich mit technisch üblichen Geräten durchführen. Auch für den Fachmann war es jedoch überraschend, daß bei der Herstellung der prepolymeren Epoxidharzmischung aus einer Reaktionsharzmischung von Polyepoxid- und Polyisocyanatharzen, selbst bei Verwendung von hochfunktionellen Polyepoxidharzen, wie Kresolnovolak-Epoxidharzen und Tetraglycidyldiaminodiphenylmethan, bei Reaktionstemperaturen bis zu 180°C eine lagerstabile, schmelzbare, latent raktive Mischung erhalten wird. Dies wird auch dadurch unterstrichen, daß bei der Reaktion zur Herstellung der prepolymeren Epoxidharzmischung zunächst ein festes, pulverisierbares unlösliches Produkt entsteht, das sich erst bei höheren Temperaturen in die schmelzbare, latent reaktive prepolymere Epoxidharzmischung umwandelt.

Es zeigte sich ferner, daß sowohl die prepolymere Epoxidharzmischung als auch die damit hergestellte phenolisch härtbare Epoxidharzmasse eine hervorragende latent reaktive Einstellung besitzen, außerdem weisen sie, wie später noch gezeigt wird, eine sehr gute Lagerstabilität auf. Besonders vorteilhaft ist auch, daß die latent reaktive Einstellung der phenolisch härtbaren Epoxidharzmasse, im Hinblick auf den Einsatzzweck, über die Konzentration des Reaktionsbeschleunigers (in der Reaktionsharzmischung aus Polyepoxid- und Polyisocyanatharz) gezielt eingestellt werden kann, ohne daß dadurch die Lagerstabilität eingeschränkt wird. Zur Erhöhung der Reaktivität der Epoxidharzmasse ist deshalb keine aufwendige Nachbeschleunigung erforderlich. So erfolgt beispielsweise bei einer phenolisch härtbaren Epoxidharzmasse, zu deren Herstellung eine Reaktionsharzmischung (aus Polyepoxid- und Polyisocyanatharz) mit einem Beschleunigergehalt von 1,0 % verwendet wurde, der Viskositätsanstieg bei 170°C nach ca. 1 min. Mit einem Gehalt von 1,35 % erfolgt - bei 170°C - der Viskositätsanstieg dagegen bereits nach 30 s.

Die rieselfähige, phenolisch härtbare Epoxidharzmasse nach der Erfindung besitzt sehr gute Verarbeitungseigenschaften. So kann die Formgebung unter Druck zu einem stabilen Preßling kalt erfolgen, ohne daß bei der nachfolgenden Härtung des entformten Preßlings die Konturenschärfe verlorengeht und eine wesentliche Änderung der Dichte erfolgt. Zur Erhöhung der Dichte des Preßlings kann dieser auch bei Temperaturen von 90 bis 100°C gepreßt werden, ohne daß die Fließfähigkeit der Epoxidharzmasse durch Anhärtung verlorengeht. Gegenüber einer kalten Formgebung kann die Dichte des Preßlings bei der warmen Formgebung um über 10 % erhöht werden. Die Formgebung und Härtung der rieselfähigen Epoxidharzmasse kann auch direkt in der Presse bei Temperaturen von 160 bis 190°C innerhalb von 1 bis 2 min durchgeführt werden.

Die Verwendung von Siliconepoxidharzen der genannten Art bringt sowohl für die Herstellung und Verarbeitung der phenolisch härtbaren Epoxidharzmasse als auch für die Formstoffeigenschaften besondere Vorteile. So wird bei der Herstellung der Epoxidharzmasse ein schonendes Mahlen beim Pulverisieren ermöglicht, während bei der Verarbeitung der Epoxidharzmasse zu kunststoffgebundenen Magneten das Fließverhalten bei der Formgebung und die Entformungseigenschaften verbessert werden. Bei den gehärteten Formstoffen verbessern die Siliconepoxidharze die Oberflächengüte, ohne die Verbundfestigkeit zu beeinträchtigen.

Die mechanisch-thermischen Formstoffeigenschaften der phenolisch gehärteten Epoxidharzmasse liegen - unabhängig von den gewählten Verarbeitungsbedingungen - auf sehr hohem Niveau. Dies zeigt sich vor allem bei den Biegebruchfestigkeiten und den Glasübergangstemperaturen, wie später noch dargestellt wird. Insbesondere auch bei einem Vergleich mit Epoxidharzmassen nach dem Stand der Technik, die analog den phenolisch härtbaren Epoxidharzmassen verarbeitet werden, ergeben sich die außergewöhnlich hohen mechanisch-thermischen Formstoffeigenschaften.

Anhand von Ausführungsbeispielen soll die Erfindung noch näher erläutert werden.

### Beispiel 1

### Herstellung einer prepolymeren Epoxidharzmischung

In einen Mischbehälter werden 448 g Bisphenol A-Epoxidharz (Epoxidwert: 5,78 mol/kg), 27,6 g eines Siliconepoxids (Epoxidwert: 1,9 mol/kg), hergestellt nach Beispiel 9 der EP-OS 0 399 199, 6,8 g Glycerinmonostearat, 144,8 g Tetraglycidyldiaminodiphenylmethan (Epoxidwert: 8,2 mol/kg) und 162 g eines Isomerengemisches von Diisocyanatodiphenylmethan (Isocyanatwert: 7,9 mol/kg) gegeben; die Mischung wird dann unter Rühren bei vermindertem Druck auf 95°C erwärmt und entgast. Nachfolgend werden zur Mischung unter Rühren portionsweise 3200 g eines handelsüblichen Magnetpulvers gegeben, das aus einer Legierung mit 27,5 % Nd, 5 % Co, 1 % B und 66,5 % Fe besteht (NdFeCoB-Pulver). Anschließend wird 2 h bei 95°C unter Rühren entgast und die Reaktionsharzmischung auf 60°C abgekühlt. In die 60°C warme Reaktionsharzmischung werden 10,4 g 1-Cyanoethyl-2-phenylimidazol eindosiert, dann wird 15 min unter Rühren entgast.

Anschließend wird der Mischbehälter auf 180°C aufgeheizt und die Mischung unter Rühren zur Reaktion gebracht. Der Reaktionsverlauf wird durch Temperaturmessung ständig verfolgt; die Reaktionstemperatur steigt etwa bis auf 160°C. Der Abbruch der Reaktion erfolgt, wie in Vorversuchen ermittelt, durch Abkühlen 12 min nach Beginn des Aufheizens. Zu diesem Zeitpunkt sind von den eingesetzten Epoxidgruppen 30 % umgesetzt. Die beim Abkühlen erstarrende Masse wird durch das Rührwerk grob zerkleinert. Diese Masse wird dann bei Raumtemperatur mittels einer Feinprallmühle mit Mahlbahn und Siebeinlage auf eine Korngröße < 400 pm gemahlen. Die dabei erhaltene rieselfähige, isocyanatgruppenfreie, latent reaktive prepolymere Epoxidharzmischung 1 (Epoxidwert: 0,77 mol/kg) wird bei Raumtemperatur unter Feuchteausschluß gelagert.

In Tabelle 1 sind die Epoxidwerte und die Viskosität der Epoxidharzmischung bei mehrmonatiger Lagerung - bei Raumtemperatur und unter Ausschluß von Luftfeuchte - wiedergegeben.

### Beispiel 2

### Herstellung einer Phenolharzmischung

In einen Mischbehälter werden 793 g Kresolnovolakharz sowie 6,9 g Glycerinmonostearat gegeben, und die beiden Komponenten werden unter Rühren auf 160°C erwärmt. Unter weiterem Rühren wird dann 1,5 h entgast. Nachfolgend werden in die 160°C warme Phenolharzmischung 3200 g NdFeCoB-Pulver (siehe Beispiel 1) portionsweise eingemischt. Anschließend wird nochmals unter Rühren 1,5 h entgast. Die beim Abkühlen erstarrende Masse wird durch das Rührwerk grob zerkleinert. Diese Masse wird dann bei Raumtemperatur mittels einer Feinprallmühle auf eine Korngröße < 400 µm gemahlen. Die dabei erhaltene rieselfähige Phenolharzmischung 2 (OH-Wert: 1,96 mol/kg; Viskosität bei 170°C: 60 Pa.s) wird bei Raumtemperatur unter Feuchteausschluß gelagert.

### Beispiel 3

### Herstellung einer phenolisch härtbaren Epoxidharzmasse

Die rieselfähige prepolymere Epoxidharzmischung nach Beispiel 1 und die rieselfähige Phenolharzmischung nach Beispiel 2 werden im Molverhältnis der Epoxidgruppen zu den phenolischen Hydroxylgruppen von 1:1 gemischt. Dies erfolgt bei Raumtemperatur in einem Kegelstumpfmischer mit Wendelrührer, ausgehend von 426,1 g der Epoxidharzmischung und 173,9 g der Phenolharzmischung. Die dabei erhaltene rieselfähige, latent reaktive, phenolisch härtbare Epoxidharzmasse 3 (Epoxidwert: 0,55 mol/kg) mit einem Gesamtgehalt an magnetischem Füllstoff von 80 % wird bei Raumtemperatur unter Feuchteausschluß gelagert.

In Tabelle 1 sind die Epoxidwerte und die Viskosität der Epoxidharzmasse bei mehrmonatiger Lagerung - bei Raumtemperatur und unter Auschluß von Luftfeuchte - wiedergegeben.

### Beispiel 4

### Herstellung von phenolisch härtbaren Epoxidharzmassen und kunststoffgebundenen Magneten

Die rieselfähige prepolymere Epoxidharzmischung nach Beispiel 1 und die rieselfähige Phenolharzmischung nach Beispiel 2 werden im Molverhältnis der Epoxidgruppen zu den phenolischen Hydroxylgruppen von 1:1 zusammen mit NdFeCoB-Pulver gemischt. Zur Herstellung einer Epoxidharzmasse 4a mit einem Füllstoffgehalt von 94 % werden dabei 426,1 g der Epoxidharzmischung, 173,9 g der Phenolharzmischung und 1400 g des magnetisierbaren Füllstoffes entsprechend Beispiel 3 verarbeitet. In entsprechender Weise dienen 213 g der Epoxidharzmischung, 87 g der Phenolharzmischung und 1700 g des magnetisierbaren Füllstoffes zur Herstellung einer Epoxidharzmasse 4b mit einem Füllstoffgehalt von 97 %. Die rieselfähigen, latent reaktiven, phenolisch härtbaren Epoxidharzmassen werden bei Raumtemperatur unter Feuchteausschluß gelagert.

Zur Herstellung kunststoffgebundener Magnete wird die phenolisch härtbare Epoxidharzmasse 4a bzw. 4b in einem Preßwerkzeug bei hohem Druck zu Formkörpern (Stäbe: 40 mm x 10 mm x 5 mm) gepreßt. Die Formgebung und Härtung kann dabei wie folgt durchgeführt werden:
- Pressen bei Raumtemperatur (Preßzeit: < 6 s) mit einem Druck von 600 MPa. Der entformte Preßling wird 30 min bei 175°C im Umluftofen gehärtet.
- Pressen bei 100°C (Preßzeit: < 30 s) mit einem Druck von 600 MPa. Der entformte Preßling wird wie vorstehend beschrieben gehärtet.
- Pressen bei Temperaturen von 160 bis 190°C mit einem Druck von 600 MPa; Formbelegungszeit: 30 bis 180 s. Der entformte Preßling ist weitgehend gehärtet. Eine gegebenenfalls erforderliche Nachhärtung kann bei Temperaturen von 170 bis 180°C im Umluftofen erfolgen.

### Beispiel 5

### Herstellung einer rieselfähigen Epoxidharzmasse und von kunststoffgebundenen Magneten (Vergleichsbeispiel)

In einem Schaufelmischer werden 964 g NdFeCoB-Pulver mit 36 g eines käuflichen Epoxidharzpulvers und 5 g pulverförmigem Calciumstearat 20 min bei Raumtemperatur gemischt. Anschließend wird die dabei erhaltene Epoxidharzmasse 5, die einen Füllstoffgehalt von 95,9 % besitzt, bei Raumtemperatur mit einem Druck von 600 MPa zu Stäben der Abmessung 40 mm x 10 mm x 5 mm gepreßt; die Stäbe werden 2 h bei 160°C ausgehärtet.

Wie Tabelle 3 zu entnehmen ist, weisen die aus der Epoxidharzmasse 5 hergestellten kunststoffgebundenen Magnete eine ähnliche Dichte und Remanenz auf wie die aus der erfindungsgemäßen Epoxidharzmasse 4b hergestellten Magnete, die Biegebruchfestigkeit ist mit 8,5 N/mm² - im Vergleich zu 43 N/mm² - jedoch deutlich geringer.

### Beispiel 6

### Herstellung einer rieselfähigen Epoxidharzmasse und von kunststoffgebundenen Magneten (Vergleichsbeispiel)

22,0 g eines Epoxidharzes auf Basis von Bisphenol A und 5,2 g eines aminischen Härters werden unter Rühren in 130 g Aceton gelöst; zu dieser Lösung werden - unter weiterem Rühren - 1000 g NdFeCoB-Pulver gegeben. Unter Erwärmen auf 40 bis 50 °C wird dann das Lösungsmittel im Vakuum entfernt. Nach Lagerung und Zerkleinerung der Masse werden 5,0 g Calciumstearatpulver zugemischt. Die dabei erhaltene Epoxidharzmasse 6 wird - entsprechend Beispiel 5 - zu Stäben gepreßt und ausgehärtet.

Wie Tabelle 3 zu entnehmen ist, erreicht die Biegebruchfestigkeit der aus der Epoxidharzmasse 6 hergestellten kunststoffgebundenen Magnete mit 10 N/mm² bei weitem nicht den Wert der aus der erfindungsgemäßen Epoxidharzmasse 4b hergestellten Magnete von 43 N/mm².

Außer für die vorstehend genannten Magnete sind in Tabelle 3 auch die Formstoffeigenschaften weiterer kunststoffgebundener Magnete wiedergegeben, die entweder aus der erfindungsgemäßen Epoxidharzmasse 4b oder aus der Epoxidharzmasse 6 (entsprechend dem Stand der Technik) hergestellt wurden; dabei erfolgte die Verarbeitung bzw. Härtung bei unterschiedlichen Bedingungen. Neben der Biegebruchfestigkeit ist in Tabelle 3 - für alle Magnete - auch die Dichte und die Remanenz aufgeführt.

### Beispiel 7

### Herstellung einer prepolymeren Epoxidharzmischung

In einen Mischbehälter werden 50,4 g Bisphenol A-Epoxidharz (Epoxidwert: 5,78 mol/kg), 3,1 g des Siliconepoxids entsprechend Beispiel 1 (Epoxidwert: 1,9 mol/kg), 0,8 g Glycerinmonostearat, 16,3 g Tetraglycidyldiaminodiphenylmethan (Epoxidwert: 8,2 mol/kg) und 18,2 g eines Isomerengemisches von Diisocyanatodiphenylmethan (Isocyanatwert: 7,9 mol/kg) gegeben; die Mischung wird dann unter Rühren bei vermindertem Druck auf 95°C erwärmt. Nachfolgend werden zur Mischung unter Rühren 2910 g NdFeCoB-Pulver portionsweise zugegeben. Anschließend wird 2 h bei 90°C entgast. In die 90°C warme Reaktionsharzmischung werden 0,9 g 2-Phenylimidazol eindosiert, dann wird 10 min unter Rühren entgast.

Nachfolgend wird der Mischbehälter auf 180°C aufgeheizt und die Mischung unter Rühren zur Reaktion gebracht. Der Reaktionsverlauf wird durch Temperaturmessung ständig verfolgt; die Reaktionstemperatur steigt etwa bis auf 155°C. Der Abbruch der Reaktion erfolgt, wie in Vorversuchen ermittelt, durch sofortiges Abkühlen der Mischung 10 min nach Beginn des Aufheizens. Zu diesem Zeitpunkt sind von den eingesetzten Epoxidgruppen 30 % umgesetzt. Die beim Abkühlen erstarrende Masse wird durch das Rührwerk zerkleinert. Die dabei erhaltene rieselfähige, latent reaktive prepolymere Epoxidharzmischung 7 (Epoxidwert: 0,09 mol/kg), die einen Füllstoffgehalt von 97 % aufweist, wird bei Raumtemperatur unter Feuchteausschluß gelagert.

### Beispiel 8

### Herstellung einer Phenolharzmischung

In einen Mischbehälter werden 89 g Kresolnovolakharz und 1 g Glycerinmonostearat sowie 2910 g NdFeCoB-Pulver gegeben, und die drei Komponenten werden unter Rühren auf 160°C erwärmt. Anschließend wird 1,5 h unter Rühren entgast. Die beim Abkühlen erstarrende Masse wird durch das Rührwerk zerkleinert. Die dabei erhaltene rieselfähige Phenolharzmischung 8 (OH-Wert: 0,25 mol/kg) wird bei Raumtemperatur unter Feuchteausschluß gelagert.

### Beispiel 9

### Herstellung einer phenolisch härtbaren Epoxidharzmasse und von kunststoffgebundenen Magneten

Die rieselfähige prepolymere Epoxidharzmischung nach Beispiel 7 und die rieselfähige Phenolharzmischung nach Beispiel 8 werden im Molverhältnis der Epoxidgruppen zu den phenolischen Hydroxylgruppen von 1:1 gemischt. Dies erfolgt bei Raumtemperatur in einem Kegelstumpfmischer mit Wendelrührer, ausgehend von 735 g der Epoxidharzmischung und 265 g der Phenolharzmischung. Die dabei erhaltene rieselfähige, latent reaktive, phenolisch härtbare Epoxidharzmasse 9 mit einem Gesamtgehalt an magnetisierbarem Füllstoff von 97 % wird bei Raumtemperatur unter Feuchteausschluß gelagert.

Zur Herstellung kunststoffgebundener Magnete wird die phenolisch härtbare Epoxidharzmasse 9 in einem Preßwerkzeug bei hohem Druck zu Formkörpern (Stäbe: 40 mm x 10 mm x 5 mm) gepreßt. Die Formgebung und Härtung erfolgt nach der in Beispiel 4 angegebenen Weise.

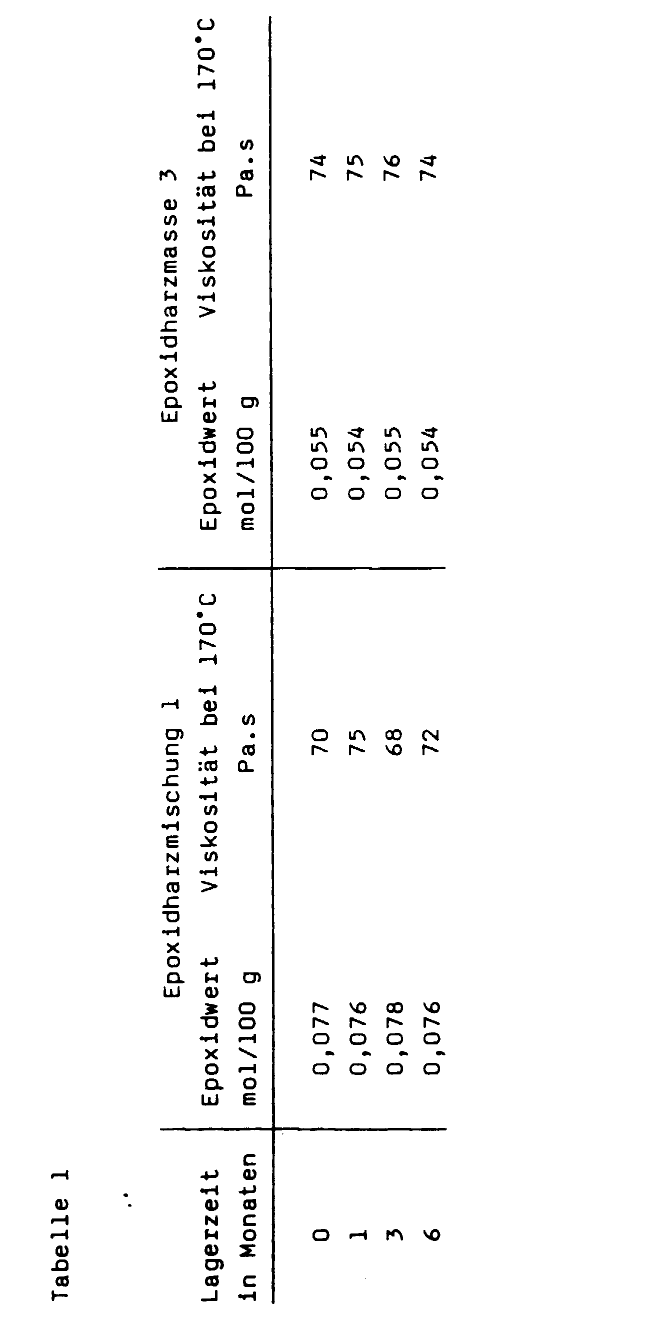

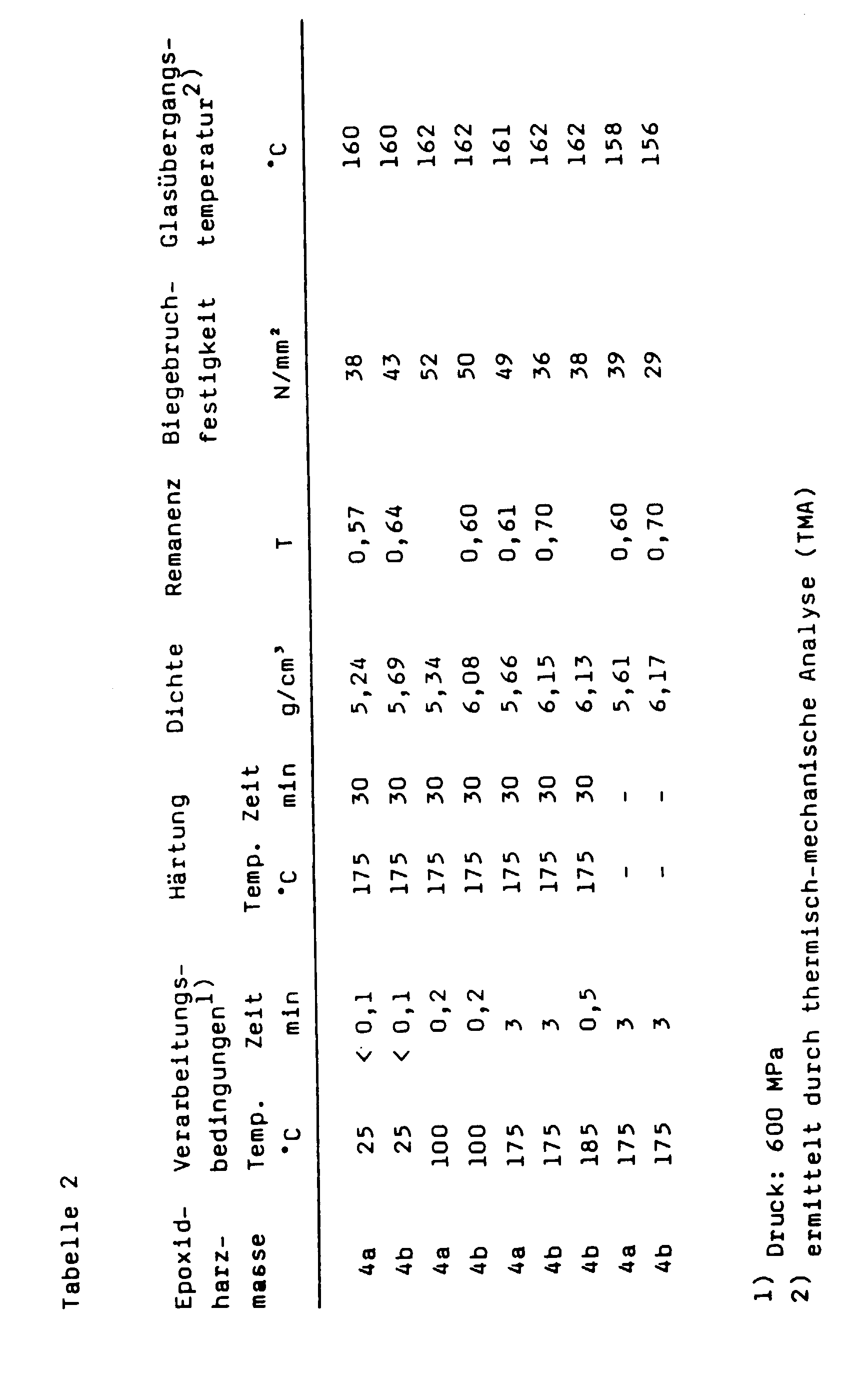

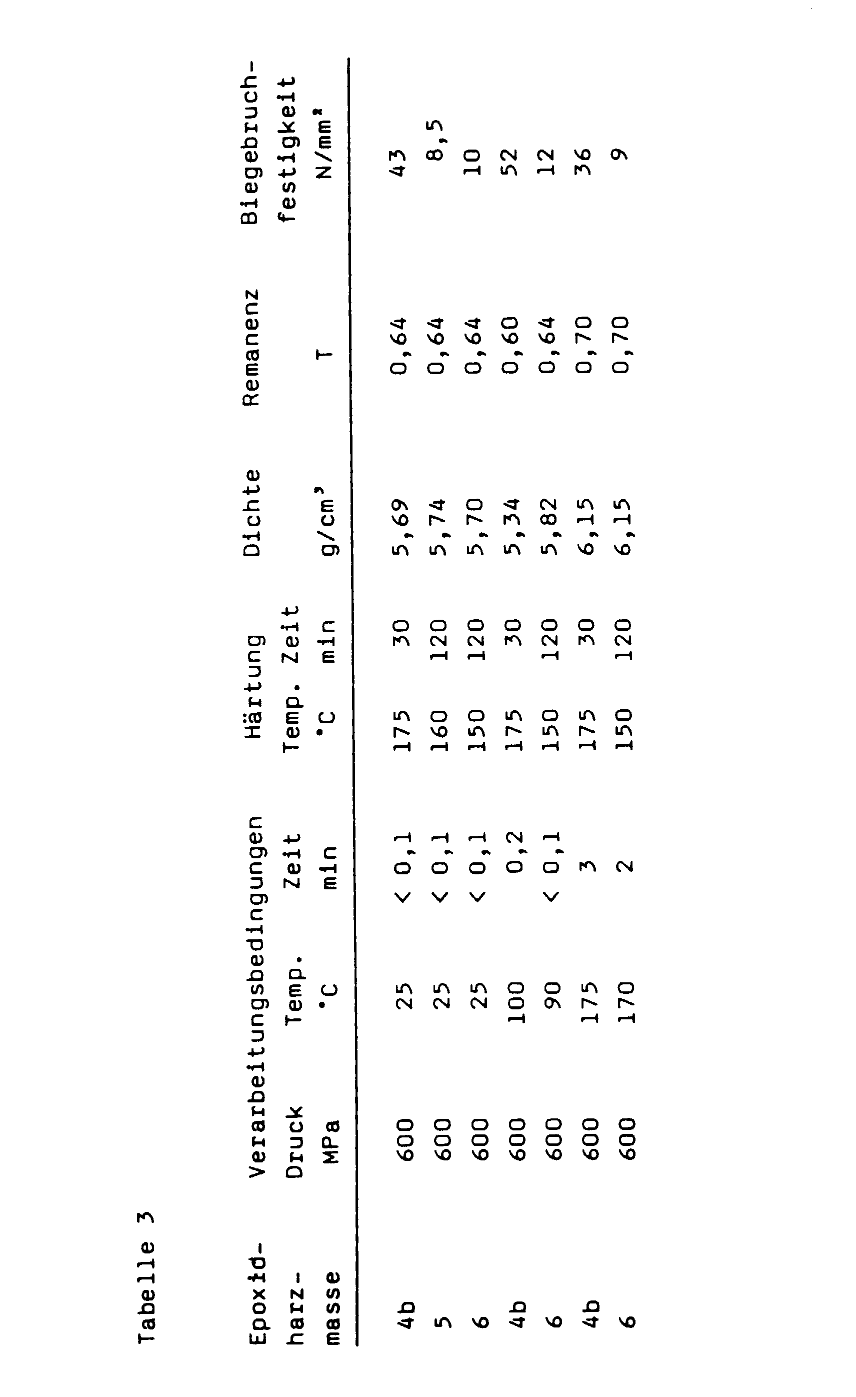

## Patentansprüche

1. Verfahren zur Herstellung einer magnetisierbaren Füllstoff enthaltenden, rieselfähigen, latent reaktiven, phenolisch härtbaren Epoxidharzmasse, **dadurch gekennzeichnet,** daß aus einer magnetisierbaren Füllstoff enthaltenden, thermisch polymerisierbaren Reaktionsharzmischung von Polyepoxid- und Polyisocyanatharz mit einem Molverhältnis der Epoxidgruppen zu den Isocyanatgruppen > 1 bei Reaktionstemperaturen bis zu 180°C, unter Verwendung von substituiertem Imidazol als Reaktionsbeschleuniger, eine isocyanatgruppenfreie, latent reaktive prepolymere Epoxidharzmischung mit Oxazolidinon- und/oder Isocyanuratstrukturen in Pulverform hergestellt wird, und daß die prepolymere Epoxidharzmischung mit einer pulverförmigen, magnetisierbaren Füllstoff enthaltenden Phenolharzmischung im Molverhältnis der Epoxidgruppen zu den phenolischen Hydroxylgruppen von 1:0,4 bis 1:1,1 vermischt wird, gegebenenfalls unter Zusatz von weiterem magnetisierbaren Füllstoff und/oder von Additiven.

2. Verfahren nach Anspruch 1, **dadurch gekennzeichnet,** daß als Polyepoxidharz Bisphenol A-Epoxidharze, Bisphenol F-Epoxidharze oder Mischungen dieser Epoxidharze mit Phenol- und/oder Kresolnovolak-Epoxidharzen, Triglycidylisocyanurat oder Tetraglycidyldiaminodiphenylmethan eingesetzt werden.

3. Verfahren nach Anspruch 1 oder 2, **dadurch gekennzeichnet,** daß als Polyisocyanatharz Isomerengemische von Diisocyanatodiphenylmethan eingesetzt werden.

4. Verfahren nach einem der Ansprüche 1 bis 3, **dadurch gekennzeichnet,** daß die Reaktionsharzmischung aus Polyepoxid- und Polyisocyanatharz zusätzlich ein Siliconepoxidharz der allgemeinen Formel 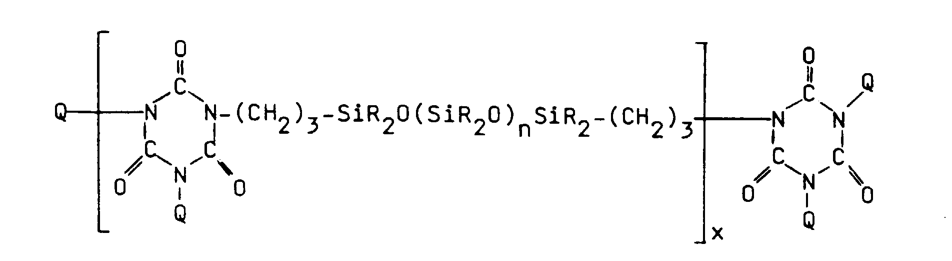 enthält, wobei folgendes gilt:
n ist eine ganze Zahl von 0 bis 25,
x ist eine ganze Zahl von 0 bis 3,
R = Alkyl oder Aryl,
Q = -(CH₂)₃SiR₂O(SiR₂O)ₙSiR₂R',
wobei n und R die vorstehend angegebene Bedeutung haben und R' ein epoxyfunktioneller Rest mit 6 C-Atomen ist.

5. Verfahren nach Anspruch 4, **dadurch gekennzeichnet,** daß der Gehalt an Siliconepoxidharz, bezogen auf die füllstofffreie Reaktionsharzmischung aus Polyepoxid- und Polyisocyanatharz, bis zu 20 % beträgt, vorzugsweise 1 bis 10 %.

6. Verfahren nach einem oder mehreren der Ansprüche 1 bis 5, **dadurch gekennzeichnet,** daß in der Reaktionsharzmischung das Molverhältnis der Epoxidgruppen zu den Isocyanatgruppen 1,5:1 bis 3,5:1 beträgt.

7. Verfahren nach einem oder mehreren der Ansprüche 1 bis 6, **dadurch gekennzeichnet,** daß als Reaktionsbeschleuniger 1-Cyanoethyl-2-phenylimidazol, 2-Ethyl-4-methylimidazol oder 2-Phenylimidazol eingesetzt wird.

8. Verfahren nach einem oder mehreren der Ansprüche 1 bis 7, **dadurch gekennzeichnet,** daß der Gehalt an Reaktionsbeschleuniger, bezogen auf die füllstofffreie Reaktionsharzmischung, 0,5 bis 1,5 % beträgt.

9. Verfahren nach einem oder mehreren der Ansprüche 1 bis 8, **dadurch gekennzeichnet,** daß weichmagnetische Füllstoffe wie Eisen, Ferrite, kristalline Legierungen des Typs FeSi, FeP, FeNi, FeCo und FeNiMo(Cu) oder amorphe Werkstoffe des Typs FeSiB und FeNi(Co)B eingesetzt werden.

10. Verfahren nach einem oder mehreren der Ansprüche 1 bis 8, **dadurch gekennzeichnet,** daß hartmagnetische Füllstoffe wie Hartferrite oder Legierungen des Typs AlNiCo, FeCoCr, SECo₅, SE₂Co₁₇, SE₂M₁₄B und SEMN(C) eingesetzt werden, wobei SE ein Seltenerdmetall und M ein Übergangselement bedeutet.

11. Verfahren nach einem oder mehreren der Ansprüche 1 bis 10, **dadurch gekennzeichnet,** daß der Gehalt der Epoxidharzmasse an magnetisierbarem Füllstoff bis zu 99,5 % beträgt, vorzugsweise zwischen 90 und 98 %.

12. Verwendung der nach dem Verfahren nach einem oder mehreren der Ansprüche 1 bis 11 hergestellten Epoxidharzmasse zur Herstellung von kunststoffgebundenen Magneten.

## Claims

1. Method for producing a free-flowing, latently reactive, phenolically hardenable epoxy-resin compound which contains magnetizable filler, characterised in that from a reaction resin mixture of polyepoxy resin and polyisocyanate resin, which reaction resin mixture contains magnetizable filler, is thermally polymerisable and has a mole ratio of the epoxy groups to the isocyanate groups of > 1, at reaction temperatures of up to 180°C, using substituted imidazole as a reaction catalyst, an isocyanate-group-free, latently reactive prepolymeric epoxy-resin mixture with oxazolidinone structures and/or isocyanurate structures is produced in powdered form, and in that the prepolymeric epoxy-resin mixture is mixed with a powdered phenolic-resin mixture, which contains magnetizable filler, in the mole ratio of the epoxy groups to the phenolic hydroxyl groups of 1:0.4 to 1:1.1, possibly adding further magnetizable filler and/or additives.

2. Method according to claim 1, characterised in that bisphenol A epoxy resins, bisphenol F epoxy resins or mixtures of these epoxy resins with phenol novolak epoxy resins and/or cresol novolak epoxy resins, triglycidylisocyanurate or tetraglycidyldiaminodiphenylmethane are used as a polyepoxy resin.

3. Method according to claim 1 or 2, characterised in that isomer mixtures of diisocyanatodiphenylmethane are used as a polyisocyanate resin.

4. Method according to one of the claims 1 to 3, characterised in that the reaction resin mixture of polyepoxy resin and polyisocyanate resin additionally contains a silicone epoxy resin of the general formula 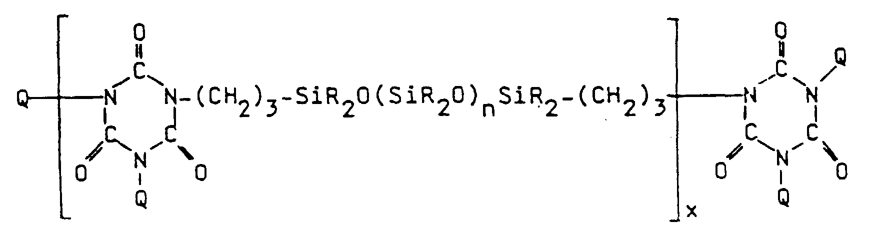 in which the following applies:
n is a whole number from 0 to 25,
x is a whole number from 0 to 3,
R = alkyl or aryl,
Q = -(CH₂)₃SiR₂O(SiR₂O)ₙSiR₂R',
where n and R have the meaning given above and R' is an epoxy-functional residue with 6 C-atoms.

5. Method according to claim 4, characterised in that the content of silicon epoxy resin, in relation to the filler-free reaction resin mixture of polyepoxy resin and polyisocyanate resin, amounts to up to 20%, preferably 1 to 10%.

6. Method according to one or more of the claims 1 to 5, characterised in that in the reaction resin mixture, the mole ratio of the epoxy groups to the isocyanate groups amounts to 1.5:1 to 3.5:1.

7. Method according to one or more of the claims 1 to 6, characterised in that 1-cyanoethyl-2-phenylimidazole, 2-ethyl-4-methylimidazole or 2-phenylimidazole are used as a reaction catalyst.

8. Method according to one or more of the claims 1 to 7, characterised in that the content of reaction catalyst, in relation to the filler-free reaction resin mixture, amounts to 0.5 to 1.5%.

9. Method according to one or more of the claims 1 to 8, characterised in that soft magnetic fillers such as iron, ferrites, crystalline alloys of the type FeSi, FeP, FeNi, FeCo and FeNiMo(Cu) or amorphous materials of the type FeSiB and FeNi(Co)B are used.

10. Method according to one or more of the claims 1 to 8, characterised in that hard magnetic fillers such as hard ferrites or alloys of the type AlNiCo, FeCoCr, SECO₅, SE₂Co₁₇, SE₂M₁₄B and SEMN(C) are used, where SE is a rare earth metal and M is a transition element.

11. Method according to one or more of the claims 1 to 10, characterised in that the content of the epoxy-resin compound of magnetisable filler amounts to up to 99.5%, preferably between 90 and 98%.

12. Use of the epoxy-resin compound produced according to the method according to one or more of the claims 1 to 11, for the production of plastics-bonded magnets.

## Revendications

1. Procédé de fabrication d'une masse en résine époxyde à écoulement libre, à réactivité latente et durcissable phénoliquement et contenant une charge magnétisable, caractérisé en ce qu'on prépare à partir d'une composition de résine de réaction thermiquement polymérisable, contenant une charge magnétisable, de résine polyépoxyde et polyisocyanate avec un rapport molaire des groupes époxydes aux groupes isocyanates > 1 à des températures de réaction jusqu'à 180 °C, en utilisant de l'imidazole substitué à titre d'accélérateur de réaction, une composition de résine époxyde prépolymère à réaction latente, exempte de groupes isocyanates et avec des structures d'oxazolidinone et/ou d'isocyanurate sous forme de poudre, et en ce que la composition de résine époxyde prépolymère est mélangée à une composition de résine phénolique sous forme de poudre, contenant une charge magnétisable, dans un rapport molaire des groupes époxydes aux groupes hydroxyles phénoliques de 1 : 0,4 à 1:1,1, en ajoutant éventuellement une charge magnétisable supplémentaire et/ou des additifs.

2. Procédé selon la revendication 1, caractérisé en ce qu'on utilise à titre de résine polyépoxyde des résines époxydes de bisphénol A, des résines époxydes de bisphénol F ou des mélanges de ces résines époxydes avec des résines époxydes de type phénol- et/ou crésol-novolaque, de l'isocyanurate triglycidilique ou du tétraglycidyldiaminodiphénylméthane,

3. Procédé selon la revendication 1 ou 2, caractérisé en ce qu'on utilise à titre de résine de polyisocyanate des mélanges d'isomères du diisocyanatodiphénylméthane.

4. Procédé selon une des revendications 1 à 3, caractérisé en ce que la composition de résine de réaction constituée de résine polyépoxyde et polyisocyanate contient en outre une résine de silicone époxydée répondant à la formule générale 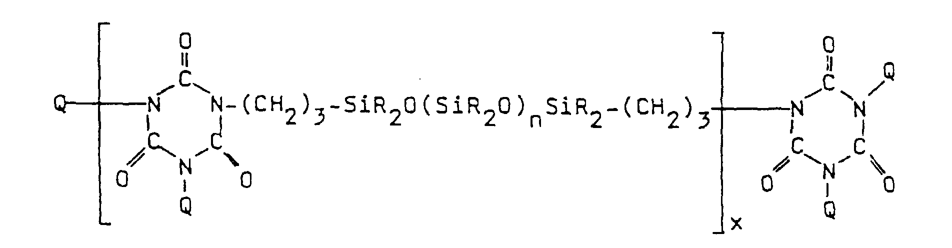 où vaut ce qui suit:
n est un nombre entier de 0 à 25,
x est un nombre entier de 0 à 3,
R représente un groupe alkyle ou un groupe aryle,
Q représente un groupe -(CH₂)₃SiR₂O(SiR₂O)ₙSiR₂R',
où n et R présentent la signification indiquée précédemment et R' est un résidu époxy fonctionnel avec 6 atomes de carbone.

5. Procédé selon la revendication 4, caractérisé en ce que la teneur en résine de silicone époxydée, par rapport à la composition de résine de réaction exempte de charge, constituée de résine polyépoxyde et polyisocyanate vaut jusqu'à 20 %, de préférence de 1 à 10 %.

6. Procédé selon une ou plusieurs des revendications 1 à 5, caractérisé en ce que dans la composition de résine de réaction le rapport molaire des groupes époxydes aux groupes isocyanates vaut 1,5:1 à 3,5:1.

7. Procédé selon une ou plusieurs des revendications 1 à 6, caractérisé en ce qu'on utilise à titre d'accélérateur de réaction du 1-cyanoéthyl-2-phénylimidazole, du 2-éthyl-4-méthylimidazole ou du 2-phénylimidazole.

8. Procédé selon une ou plusieurs des revendications 1 à 7, caractérisé en ce que la teneur en accélérateur de réaction, par rapport à la composition de résine de réaction exempte de charge, vaut 0,5 à 1,5 %.

9. Procédé selon une ou plusieurs des revendications 1 à 8, caractérisé en ce qu'on utilise des charges à magnétisme doux, telles que le fer, les ferrites, les alliages cristallins de type FeSi, FeP, FeNi, FeCo et FeNiMo(Cu) ou des matériaux amorphes du type FeSiB et FeNi(Co)B.

10. Procédé selon une ou plusieurs des revendications 1 à 8, caractérisé en ce qu'on utilise des charges à magnétisme dur, telles que des ferrites durs ou des alliages du type AlNiCo, FeCoCr, SECO₅, SE₂Co₁₇, SE₂M₁₄B ou SEMN(C), où SE représente un métal de terre rare et M représente un élément de transition.

11. Procédé selon une ou plusieurs des revendications 1 à 10; caractérisé en ce que la teneur de la masse de résine époxyde en charge magnétisable vaut jusqu'à 99,5 %, de préférence entre 90 et 98 %.

12. Utilisation de la masse de résine époxyde préparée suivant le procédé selon une ou plusieurs des revendications 1 à 11 pour la fabrication d'aimants liés à une matière synthétique.
